# EUROPÄISCHE PATENTSCHRIFT

(11) **EP 1 099 197 B1**
(45) Veröffentlichungstag und Bekanntmachung des Hinweises auf die Patenterteilung: **02.10.2002**
(21) Anmeldenummer: 99944537.2
(22) Anmeldetag: 27.08.1999
(51) Int. Cl.: G07F 7/10

(54) **VORRICHTUNG ZUM LIEFERN VON AUSGANGSDATEN ALS REAKTION AUF EINGANGSDATEN UND VERFAHREN ZUM ÜBERPRÜFEN DER AUTHENTIZITÄT UND VERFAHREN ZUM VERSCHLÜSSELTEN ÜBERTRAGEN VON INFORMATIONEN**
DEVICE FOR SUPPLYING OUTPUT DATA IN REACTION TO INPUT DATA, METHOD FOR CHECKING AUTHENTICITY AND METHOD FOR ENCRYPTED DATA TRANSMISSION
DISPOSITIF POUR FOURNIR DES DONNEES DE SORTIE EN REACTION A DES DONNEES D'ENTREE, PROCEDE DE VERIFICATION D'AUTHENTICITE, ET PROCEDE DE TRANSFERT CODE D'INFORMATIONS

(30) Priorität: 22.09.1998 DE 19843424
(43) Veröffentlichungstag der Anmeldung: 16.05.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: OELMAIER, Florian, D-85386 Eching (DE); BRAND, Roland, D-91058 Erlangen (DE); HEUER, André, D-91052 Erlangen (DE); GERHÄUSER, Heinz, D-91344 Waischenfeld (DE); PROSCH, Markus, D-91058 Erlangen (DE); KORTE, Olaf, D-91338 Igensdorf (DE); PLANKENBÜHLER, Roland, D-90475 Nürnberg (DE)
(74) Vertreter: Schoppe, Fritz, Dipl.-Ing.
(86) Internationale Anmeldenummer: EP9906312
(87) Internationale Veröffentlichungsnummer: WO00017826

(56) Entgegenhaltungen:
- EP-A- 0 313 967
- EP-A- 0 654 919
- W. RANKL & W. EFFING: "Handbuch der Chipkarten" 10. Februar 1998 (1998-02-10) , CARL HANSER VERLAG , MÜNCHEN WIEN XP002127583 022759 Seite 276 -Seite 277 Abbildung 8.13

## Beschreibung

Die vorliegende Erfindung bezieht sich auf die Überprüfung der Authentizität in manipuliersichcren Systemen und insbesondere auf eine Vorrichtung zum Liefern von Ausgangsdaten als Reaktion auf Eingangsdaten, um abhängig von den Ausgangsdaten die Authentizität der Vorrichtung zu bestimmen, und auf Verfahren, die solche Vorrichtungen verwenden.

Heutzutage werden oft integrierte Schaltungen verwendet, die auf einer Chipkarte aufgebracht bzw. in einer Chipkarte eingebracht sind, um den Inhaber der integrierten Schaltungen bezüglich seiner Autorisierung zu überprüfen, eine bestimmte Handlung vorzunehmen, wobei zur Sicherung gegen gefälschte Karten zusätzlich eine Überprüfung der Authentizität der integrierten Schaltungen durchgeführt wird. Solche integrierten Schaltungen werden in Form von Smart Cards, wie sie in den Standard ISO 7816 definiert sind, oder in der Form von PC-Cards, wie sie in PCMCIA's PC CARD Stardard, Ausgabe 6.1 definiert sind, eingesetzt. Weitere Anwendungsgebiete neben den genannten Möglichkeiten bestehen überall dort, wo Chipkarten verwendet werden, beispielsweise in Form von Telefonkarten oder Karten, die einen Zugang zu bestimmten Gebäuden ermöglichen, d. h. die als elektronische Schlüssel fungieren.

Wesentlich an den integrierten Schaltungen, die in solchen Karten zu finden sind, ist, daß nur der Benutzer, der im Besitz einer solchen Karte ist, auch den Zugang erhält oder z. B. ein verschlüsseltes Fernsehprogramm mittels seiner Smart Card entschlüsseln kann. Die Autorisierung erfolgt dabei z. B. durch Bezahlen, wenn an Telefonkarten oder Smart Cards in Verbindung mit Pay-TV gedacht wird, oder durch Erlauben einer bestimmten Funktion, wenn elektronische Schlüssel verwendet werden.

Um sicherzustellen, daß nur berechtigte Personen, d. h. Personen, die beispielsweise eine Telefonkarte erworben haben, telefonieren, ist es entscheidend, gefälschte Karten zu erkennen und Inhabern von gefälschten Karten am Beispiel von Telefonkarten das Telefonieren zu verbieten. Obwohl kein hundertprozentiger Schutz gegen Nachahmer existiert, besteht doch die Möglichkeit, Fälschern von Karten, die die Funktion der Karten nachahmen, so viel Schwierigkeiten als möglich zu bereiten.

Fälscher haben viel Einfallsreichtum aufgewendet, um die Funktionalität einer Chipkarte bzw. einer integrierten Schaltung zu kopieren. Eine Möglichkeit besteht beispielsweise darin, den Chip einer Chipkarte abzuschleifen und anhand des Layouts der integrierten Schaltung auf die Funktionalität des auf der Karte implementierten Algorithmus zu schließen. Dann kann die Funktionalität der Karte, d. h. der Algorithmus, der aufgrund eines Eingangswertes in die Karte einen Ausgangswert erzeugt, der von einem Kartenleser ausgewertet wird, mittels eines Computers simuliert werden. Hat ein Fälscher das Layout z. B. einer Telefonkarte ermittelt, so könnte er eine Simulationskarte, die mit einem Computer verbunden ist, in den Kartenleseschlitz eines Kartentelefons einführen und das Verhalten der Karte bei der Authentizitätsprüfung simulieren.

Selbstverständlich existieren gegenüber solchen Angriffen auch mechanische Schutzmechanismen, die beispielsweise, wenn die Karte in ein Lesegerät eingeführt ist, einen Zugriff von außen auf die Karte unterbinden. Wie es jedoch in der Fachveröffentlichung "Tamper Resistance A Cautionary Note; Proceedings - The Second USENIX Workshop on Electronic Commerce, von Markus Kuhn und Ross Anderson, dargestellt worden ist, existieren viele Fälschungsverfahren, die weiterhin den anhaltenden Bedarf nach besseren Schutzmechanismen für Schaltungen und insbesondere für integrierte Schaltungen auf einer Chipkarte unterstreichen. Übliche Datenverschlüsselungsverfahren, die beispielsweise auf dem DES-Algorithmus basieren (DES Data Encryption Standard) oder die Prüfsummenalgorithmen umfassen, liefern zwar eine hohe Sicherheit, wenn der Verschlüsselungsschlüssel, der zusammen mit dem Krypto-Algorithmus eine Entschlüsselung ermöglicht, geheimgehalten wird. Prinzipiell ist es jedoch auch hier möglich, einen solchen Algorithmus, der in Form einer integrierten Schaltung auf einer Chipkarte hardware-mäßig integriert ist, anhand der Hardware-Implementation nachzuahmen, d. h. dessen Funktionalität beispielsweise mittels eines Computers zu simulieren.

Die EP 0 313 967 bezieht sich auf ein Verfahren zur Echtheitsprüfung eines Datenträgers mit integriertem Schaltkreis. Eine Karte enthält einen Speicher, der aus einem von außen zugänglichen und einem von außen nicht zugänglichen Bereich für die Speicherung von vertraulichen Informationen, z.B. einem Schlüssel, usw. besteht. Die Karte weist ferner einen Meßkreis für die Bestimmung der individuellen Kenndaten der Karte, wie z.B. der Programmierzeiten von E²PROM-Zellen des Speichers, auf. Der Meßschaltkreis ist mit dem Speicher verbunden und kann zusätzlich Verarbeitungseinrichtungen für die Aufarbeitung der gemessenen Daten aufweisen. Die Karte enthält ferner eine Verschlüsselungseinrichtung, die die individuellen Kenndaten der Speicherzelle sowie eine von einer Zentrale übermittelte Zufallszahl unter Verwendung eines ebenfalls im Speicher gespeicherten Schlüssels verschlüsselt, um einen verschlüsselten Ausgangswert zu erzeugen, welcher in einer Zentrale wieder mit einem entsprechenden Schlüssel entschlüsselt wird, so daß sich wieder die Zufallszahl einerseits und die individuellen Kenndaten des Speichers andererseits ergeben. Die individuellen Kenndaten des Speichers sind immer die gleichen, unabhängig von der in die Karte eingespeisten Zufallszahl. Die wieder entschlüsselte Zufallszahl wird mit der von der Zentrale zur Karte übermittelten Zufallszahl verglichen. Die ermittelten individuellen Kenndaten der Speicherzelle werden mit in der Zentrale abgespeicherten Kenndaten überprüft. Stimmen sowohl Zufallszahl als auch Kenndaten überein, so wird davon ausgegangen, daß die überprüfte Karte authentisch ist. Stimmt zwar die Zufallszahl überein, sind die individuellen Kenndaten aber unterschiedlich, so kann davon ausgegangen werden, daß eine gefälschte Karte vorliegt, deren Funktionalität der der authentischen Karte entspricht, die jedoch andere Kenndaten aufweist.

Die Aufgabe der vorliegenden Erfindung besteht darin, ein Konzept zum verbesserten Schutz von elektronischen Schaltungen zu schaffen und somit eine fälschungssicherere Überprüfung der Authentizität solcher elektronischen Schaltungen und eine fälschungssicherere Autorisierung eines Inhabers solcher elektronischer Schaltungen zu schaffen.

Diese Aufgabe wird durch eine Vorrichtung nach Anspruch 1 und durch ein Verfahren nach Anspruch 17 oder 18 gelöst.

Der vorliegenden Erfindung liegt die Erkenntnis zugrunde, daß es zwar relativ einfach ist die Funktionalität eines Chips zu kopieren, daß es jedoch viel schwieriger ist, dessen Zeit- oder Leistungsverhalten nachzubilden. Eine Vorrichtung zum Liefern von Ausgangsdaten als Reaktion auf Eingangsdaten, um abhängig von den Ausgangsdaten die Authentizität der Vorrichtung zu bestimmen, umfaßt daher einerseits eine elektronische Schaltung zum Ausführen eines Algorithmus, der aus den Eingangsdaten die Ausgangsdaten erzeugt, und andererseits eine Einrichtung zum Erfassen von Betriebsdaten, die durch einen Betrieb der elektronischen Schaltung beeinflußt werden, wobei die Einrichtung zum Erfassen von Daten mit der elektronischen Schaltung derart gekoppelt ist, daß die Betriebsdaten der elektronischen Schaltung durch den Algorithmus verwendet werden, um die Ausgangsdaten zu erzeugen.

Bei einem bevorzugten Ausführungsbeispiel der vorliegenden Erfindung implementiert die elektronische Schaltung einen kryptographischen Algorithmus, der die Einrichtung zum Erfassen von Betriebsdaten aufruft, um Zeit- und/oder Leistungsmessungen durchzuführen, die neben den Eingangsdaten durch die elektronische Schaltung verwendet werden, um die Ausgangsdaten zu erzeugen. Die Ausgangsdaten stellen daher eine Kombination der Funktionalität des kryptographischen Algorithmus und der Betriebsdaten, die die Schaltung zum Ausführen des kryptographischen Algorithmus aufweist, dar. Ein Angriff auf die erfindungsgemäße Vorrichtung muß also nicht nur den kryptographischen Algorithmus sondern auch den Leistungsverbrauch und/oder das zeitliche Verhalten der elektronischen Schaltung während der Ausführung des kryptographischen Algorithmus nachbilden.

Eine Vielzahl von kryptographischen Algorithmen ist in dem Fachbuch "Applied Cryptography" von Bruce Schneier dargestellt.

Betriebsdaten der integrierten Schaltung, die beim Erzeugen der Ausgangsdaten verwendet werden, sind vorzugsweise der Leistungsverbrauch und die Laufzeit des Algorithmus in der elektronischen Schaltung. Solche Betriebs- oder "Umgebungs"-Daten können jedoch alle Daten sein, die durch einen Betrieb der elektronischen Schaltung beeinflußt werden, wie z. B. eine von der elektronischen Schaltung abgegebene elektromagnetische Strahlung und dergleichen. Grenzen für die Verwendung von Betriebsdaten bestehen darin, wie dieselben in einer praktischen Ausführung gemessen werden können, wenn zum Beispiel an elektromagnetische Strahlung gedacht wird. Bevorzugt werden daher aufgrund der leichten Meßbarkeit, Leistungsdaten und Daten bezüglich des zeitlichen Verhaltens der elektronischen Schaltung als Betriebsdaten verwendet.

Grundsätzlich ist es nicht erforderlich, daß der Algorithmus ein kryptographischer Algorithmus ist. Derselbe könnte irgendein Algorithmus sein, der abhängig von unterschiedlichen Eingangsdaten unterschiedliche Betriebsdaten aufweist. Der Schutz gegen eine Fälschung ist jedoch umso besser, je "chaotischer" die Abhängigkeit der Betriebsdaten von unterschiedlichen Eingangsdaten ist.

Zur Verbesserung des Schutzes wird es bevorzugt, als Algorithmus einen Krypto-Algorithmus einzusetzen, der an sich einen Schutz gegen Fälschung liefert, der durch die erfindungsgemäße Berücksichtigung der Betriebsdaten der elektronischen Schaltung, die diesen kryptographischen Algorithmus ausführt, erhöht wird. Üblicherweise werden Algorithmen jedoch dahingehend entworfen, daß sie ein relativ konstantes Laufzeitverhalten unabhängig von den Eingabewerten aufweisen. Um die Sicherheit weiter zu erhöhen, wird der Algorithmus, der durch die elektronische Schaltung ausgeführt wird, bevorzugterweise zwei Teilalgorithmen haben, d. h. einen kryptographischen Algorithmus und einen Test-Algorithmus, der ausschließlich daraufhin programmiert ist, daß er ein möglichst "chaotisches" Betriebsverhalten abhängig von unterschiedlichen Eingangsdaten aufweist.

Bei der Berechnung der Ausgangsdaten, die zur Überprüfung der Authentizität der Vorrichtung verwendet werden, werden jedoch die Ergebnisse des Test-Algorithmus nicht berücksichtigt, sondern lediglich die Betriebsdaten, die die elektronische Schaltung aufweist, die den Test-Algorithmus ausführt, und die Ausgangsdaten des Krypto-Algorithmus, was es für einen Fälscher noch schwieriger macht, den Test-Algorithmus anzugreifen, da er im günstigsten Fall lediglich Eingangsdaten in den Test-Algorithmus erfährt, jedoch keine Ausgangsdaten.

Eine weitere Erhöhung der Sicherheit besteht insbesondere darin, einen mehrstufigen Krypto-Algorithmus und ebenfalls einen mehrstufigen Test-Algorithmus zu verwenden, wobei als Eingangsdaten für eine Stufe des Krypto-Algorithmus neben dem Zwischenergebnis der vorausgehenden Stufe des Krypto-Algorithmus auch die Betriebsdaten des Test-Algorithmus, die durch die Ausführung der vorausgehenden Stufe des Test-Algorithmus erzeugt worden sind, verwendet werden. Diese "Verschachtelung" eines mehrstufigen Krypto-Algorithmus mit einem mehrstufigen Test-Algorithmus bietet eine hohe Sicherheit gegen Fälschungen.

Im Gegensatz zu früheren Fälschungsversuchen, die die Struktur eines Chips unter Verwendung verschiedener Verfahren zu identifizieren versucht haben, und die dann diese Daten verwendet haben, um die Funktionalität eines Chips zu analysieren und in einen anderen Chip zu integrieren, bzw. durch einen Computer zu simulieren, müssen Fälscher, die die erfindungsgemäße Vorrichtung angreifen, einen vollständigen Neuentwurf des Chips durchführen und vielleicht sogar das Produktionsverfahren darauf ausrichten. Dies ist notwendig, da nicht nur die Funktionalität des Chips nachgeahmt werden muß, sondern auch das Betriebsverhalten der elektronischen Schaltung, d. h. die Hardware. Im Gegensatz zum Stand der Technik, bei dem die Sicherheit durch immer ausgefeiltere Funktionalitäten zu erreichen versucht wurde, setzt die vorliegende Erfindung darauf, Hardwareaspekte in die Sicherheit miteinzubeziehen, derart, daß ein Fälscher unter Umständen sogar genau den gleichen Prozeß zur Herstellung integrierter Schaltungen verwenden muß, um identische Leistungs- bzw. Laufzeitdaten nachzuahmen, um eine authentische Vorrichtung zu simulieren, d. h. zu fälschen.

Bevorzugte Ausführungsbeispiele der vorliegenden Erfindung werden nachfolgend bezugnehmend auf die beiliegenden Zeichnungen detaillierter erläutert. Es zeigen:
- Fig. 1: eine Prinzipdarstellung einer Vorrichtung gemäß der vorliegenden Erfindung;
- Fig. 2: ein bevorzugtes Ausführungsbeispiel gemäß der vorliegenden Erfindung;
- Fig. 3: das Zusammenwirken eines Krypto-Algorithmus und eines Test-Algorithmus gemäß einem bevorzugten Ausführungsbeispiel der vorliegenden Erfindung;
- Fig. 4: ein Flußdiagramm für ein Verfahren zum Prüfen der Authentizität unter Verwendung zweier erfindungsgemäßer Vorrichtungen; und
- Fig. 5: ein Flußdiagramm eines Verfahrens zum verschlüsselten Übertragen von Informationen von einem ersten Ort zu einem zweiten Ort unter Verwendung zweiter erfindungsgemäßer Vorrichtungen.

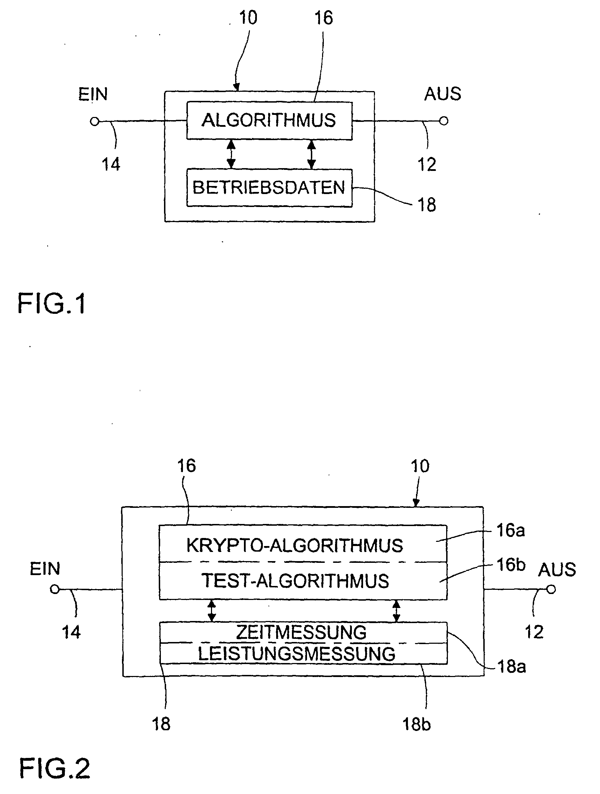

Fig. 1 zeigt als Prinzipblockschaltbild eine erfindungsgemäße Vorrichtung 10 zum Liefern von Ausgangsdaten 12 als Reaktion auf Eingangsdaten 14, um abhängig von den Ausgangsdaten 12 die Authentizität der Vorrichtung 10 zu bestimmen. Die Vorrichtung 10 umfaßt eine elektronische Schaltung 16 zum Ausführen eines Algorithmus, der aus den Eingangsdaten 14 die Ausgangsdaten 12 erzeugt, und eine Einrichtung 18 zum Erfassen von Betriebsdaten, die durch einen Betrieb der elektronischen Schaltung 16 beeinflußt werden, wobei die Einrichtung 18 zum Erfassen von Betriebsdaten mit der elektronischen Schaltung 16 derart gekoppelt ist, daß die Betriebsdaten der elektronischen Schaltung 16 durch den Algorithmus verwendet werden, um die Ausgangsdaten 12 zu erzeugen.

Die Einrichtung 18 zum Erfassen von Betriebsdaten erfaßt vorzugsweise eine verstrichene Berechnungszeit oder den Leistungsverbrauch der elektronischen Schaltung 16 zum Ausführen eines Algorithmus. Im Gegensatz zu der Funktionalität, die der Algorithmus, der durch die elektronische Schaltung 16 implementiert ist, ausführt, werden die Betriebsdaten auch als Umgebungsdaten bezeichnet. Solche Umgebungsdaten können alle Daten sein, die dazu geeignet sind, den Betrieb eines Chips, d. h. einer elektronischen Schaltung, zu beschreiben, beispielsweise die elektromagnetische Strahlung, die von der elektronischen Schaltung 16 abgegeben wird. Eine Grenze besteht lediglich wegen der technischen Möglichkeiten, Meßeinrichtungen in die Vorrichtung 10 zu integrieren.

Die Vorrichtung 10 ist vorzugsweise in integrierter Form hergestellt und als Smart Card, PC-Card, Telefonkarte, elektronischer Schlüssel und dergleichen ausgeführt. Die Messung der Betriebsdaten durch die Einrichtung 18 findet dann auf der Karte selbst statt. Daher werden Zeitdaten und Leistungsdaten als Betriebsdaten bevorzugt, da sie ohne weiteres meßbar sind.

Die Messung des aktuellen Leistungsverbrauchs kann durch ein relativ einfaches elektronisches Netzwerk realisiert werden, das aus einem Widerstand, einem Kondensator und einem Analog/Digital-Wandler besteht. Diese Schaltungsanordnung sollte so genau als möglich sein. Aufgrund von Schwankungen der Eingangsleistung und der Materialeigenschaften ist die Genauigkeit jedoch begrenzt, da wiederholte Ausführungen mit den gleichen Eingangswerten genau die gleichen Ergebnisse . unabhängig von Umgebungsbedingungen erzeugen müssen.

Fig. 2 zeigt eine etwas detailliertere Ansicht der erfindungsgemäßen Vorrichtung 10 gemäß einem bevorzugten Ausführungsbeispiel der vorliegenden Erfindung. Die elektronische Schaltung 16 zum Ausführen eines Algorithmus ist dabei in zwei Teilschaltungen 16a und 16b unterteilt, wobei die Teilschaltung 16a einen Krypto-Algorithmus ausführen kann, während die Teilschaltung 16b einen Test-Algorithmus ausführen kann.

Die Einrichtung 18 zum Erfassen von Betriebsdaten ist ebenfalls zweigeteilt und umfaßt eine Einrichtung zur Zeitmessung 18a und eine weitere Einrichtung zur Leistungsmessung 18b.

Die Zeitmessung durch die Einrichtung 18 zum Erfassen von Betriebsdaten sollte mittels eines internen Taktchips durchgeführt werden, da ein zugeführter Takt zu stark variieren kann. Die Zeitsteuerung sollte so genau als möglich sein, da wiederholte Ausführungen die gleichen Ergebnisse erzeugen müssen. Zeitmessungen können auf der Basis des Takts des Chips durchgeführt werden, wodurch jedoch sicherheitsrelevante Kompromisse eingegangen werden müssen, da dann die tatsächliche Geschwindigkeit der elektronischen Schaltung 16 relevant ist, sondern nur die Taktzyklen pro Befehl entscheidend sind.

Dadurch, daß Betriebsdaten der Einrichtung 16 verwendet werden, wird der Algorithmus, der durch die Einrichtung 16 ausgeführt wird, Hardware-abhängig gemacht. Gleichzeitig müssen diese Meßwerte jedoch zuverlässig reproduzierbar sein, derart, daß beim Überprüfen der Authentizität aufgrund von Parameterschwankungen keine falschen Ergebnisse auftreten. Andererseits sollten die Anforderungen an die Betriebsdaten, d. h. die Herstellungstoleranzen zum Herstellen einer zu testenden Vorrichtung und einer Prüfvorrichtung, so eng als möglich gewählt werden, um eine hohe Sicherheit zu erreichen.

Bezüglich der Zeitmessung ist die Einrichtung 18a bevorzugterweise angeordnet, um absolute Zeiten mittels eines unabhängigen Taktchips, der in der Einrichtung 18a integriert ist, zu messen. Damit wird eine höhere Sicherheit erreicht, jedoch auch eine Abhängigkeit von äußeren Taktgebern, wodurch die Portierbarkeit von einem Gerät zu einem anderen verschlechtert wird.

Bei der Einrichtung 18b zur Leistungsmessung entstehen durch die Hardwareabhängigkeit gewisse Probleme. Digitalisierfehler des A/D-Wandlers, der in der Einrichtung 18b zur Leistungsmessung enthalten ist, können die Resultate unvorhersagbar machen. Dieses Problem kann entweder dadurch gelöst werden, daß sehr hohe Abtastraten verwendet werden, und daß großzügige Rundungen durchgeführt werden, oder daß in der Einrichtung 18b zur Leistungsmessung aufwendige Rauschreduktionsalgorithmen implementiert sind. Eine andere Möglichkeit, dieses Problem anzugehen, besteht in der Verwendung von Mustererkennungsalgorithmen, die bestimmte Klassifikationszahlen aus den aufgezeichneten Signalen, d. h. Zeitoder Leistungsverbrauchswerten, liefern, die durch diesen Mustererkennungsalgorithmus verwendet werden können. In diesem Fall besteht die Hardwareabhängigkeit der Vorrichtung 10 darin, daß nicht absolute Betriebsdaten verwendet werden, sondern bestimmte "Verläufe", d. h. der Leistungsverbrauch über der Zeit, oder bestimmte Berechnungszeiten einzelner Algorithmusstufen eingesetzt werden, um den zusätzlichen Sicherheitsaspekt der Hardwareabhängigkeit zu erreichen.

Bezüglich der Architektur der Verknüpfung des Algorithmus, der durch die elektronische Schaltung 16 ausgeführt wird, und der Betriebsdaten werden lediglich beispielhaft zwei Möglichkeiten erwähnt. Die eine Möglichkeit wird als Prüfpunktarchitektur bezeichnet. Eine externe Steuerung, die mit der Einrichtung 16 beispielsweise über einen Hilfseingang gekoppelt ist, unterbricht die Ausführung des Algorithmus durch die elektronische Schaltung 16 z. B. nach einer bestimmten Anzahl von Taktzyklen oder Sekunden. Dann wird ein "Schnappschuß" des Ausführungszustands der elektronischen Schaltung 16 genommen. Dieser Schnappschuß umfaßt beispielsweise Daten bezüglich des Algorithmusfortschritts, Registerzustände, den Leistungsverbrauch seit dem letzten Prüfpunkt oder den Zeitverbrauch seit dem letzten Prüfpunkt. Diese Architektur macht es nicht erforderlich, den Algorithmus in Teile aufzuteilen. Wenn jedoch keine Taktzyklen für die Zeitmessung verwendet werden, ist diese Möglichkeit in der Realität schwierig zu implementieren, da eine langsamere Ausführung des Algorithmus aufgrund von äußeren Bedingungen einen Schnappschuß vollständig ändern kann. Ein Schnappschuß kann ferner nicht gerundet werden, wie es bereits angesprochen wurde. In den meisten Fällen werden ferner zu viele Daten gesammelt, daher müssen Daten kombiniert werden. Ein Kombinationsalgorithmus hängt von den während des Schnappschusses aufgezeichneten Daten ab und kann von einer einfachen XOR-Verknüpfung bis zu komplexen Prüfsummenalgorithmen, wie z. B. "Message-Digest-Algorithmen" reichen.

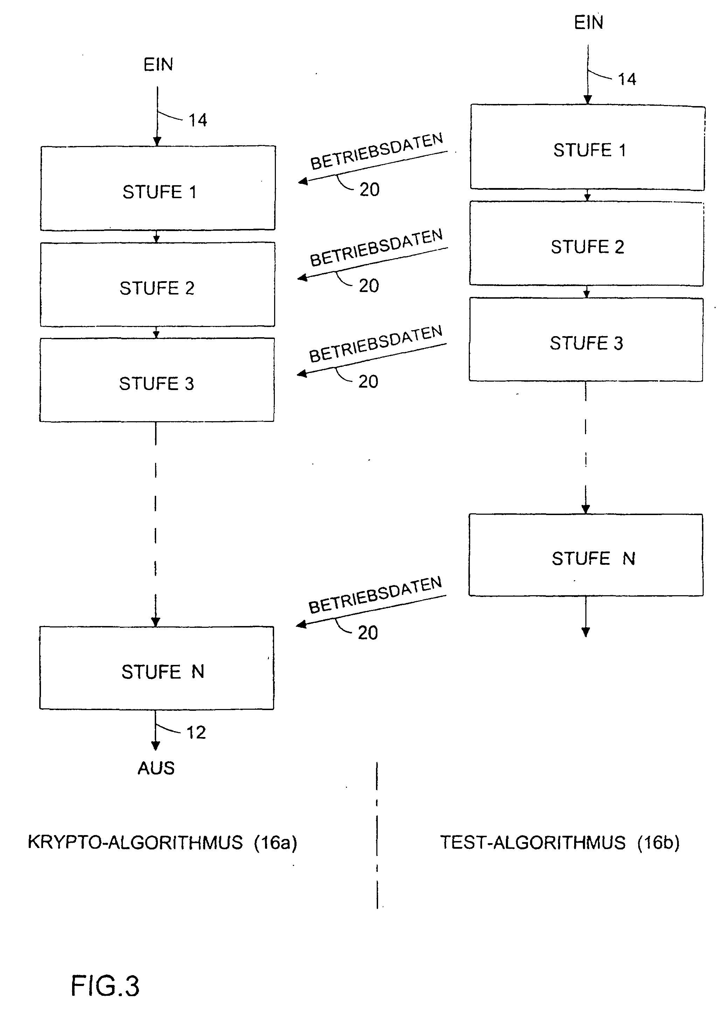

Die zweite Möglichkeit, die als die "Anforderungsarchitektur" bezeichnet wird, wird daher bevorzugt. Dieselbe ist in Fig. 3 schematisch dargestellt. Fig. 3 zeigt die Verschachtelung eines Krypto-Algorithmus 16a mit einem Testalgorithmus 16b. Der Krypto-Algorithmus 16a, der beispielsweise ein DES-Algorithmus sein kann, der in n Stufen aufgeteilt ist, erhält in Stufe 1 die Eingangsdaten 14. Ein Test-Algorithmus 16b, auf den noch eingegangen wird, ist ferner vorzugsweise ebenfalls in n Stufen aufgebaut und enthält in seiner Stufe 1 ebenfalls die Eingangsdaten 14.

Nachdem der Krypto-Algorithmus 16a die erste Stufe ausgerechnet hat, liefert er ein bestimmtes Zwischenergebnis. Die erste Stufe des Test-Algorithmus 16b liefert nicht die Ergebnisse des Test-Algorithmus, die uninteressant sind, sondern die Betriebsdaten desselben als Eingangssignal in die zweite Stufe des Krypto-Algorithmus 16a, wie es durch einen Pfeil 20 dargestellt ist. Dieses Verfahren wiederholt sich für jede der n Stufen, derart, daß jede Stufe des Krypto-Algorithmus 16a als Eingangssignal sowohl das Zwischenergebnis der letzten Stufe des Krypto-Algorithmus als auch die Betriebsdaten des Test-Algorithmus der letzten Stufe erhält. Diese Architektur heißt deswegen Anforderungsarchitektur, da entweder der Krypto-Algorithmus selbst oder eine Steuerung den Test-Algorithmus auffordert, Messungen von Betriebsdaten durchzuführen und die Betriebsdaten dann zum Krypto-Algorithmus zu übermitteln.

Obwohl bisher davon gesprochen wurde, daß, wenn sowohl der Krypto-Algorithmus als auch der Test-Algorithmus durch die elektronische Schaltung 16 ausgeführt werden, die Ergebnisse des Test-Algorithmus nicht berücksichtigt werden, und nur die Betriebsdaten der elektronischen Schaltung, die den Test-Algorithmus ausführt, bei der Erzeugung der Ausgangsdaten 12 berücksichtigt werden, können selbstverständlich auch die Ergebnisdaten des Test-Algorithmus in den Krypto-Algorithmus miteinbezogen werden. Dadurch, daß die Ergebnisdaten des Test-Algorithmus jedoch in der Vorrichtung selbst verworfen werden und überhaupt nicht nach außen treten, wird es einem Fälscher wesentlich schwerer gemacht, auf den Test-Algorithmus zu schließen, um dessen Betriebsverhalten zu simulieren, um die Betriebsdaten zu gewinnen, da er im für ihn günstigsten Fall lediglich die Eingangsdaten 14 in denselben und die Betriebsdaten kennt, jedoch nicht die Ausgangsdaten. Es ist ihm daher nahezu unmöglich, die Funktionalität des Test-Algorithmus nachzubilden, um auf die Betriebsdaten schließen zu können.

Prinzipiell wäre es auch möglich, die Betriebsdaten mit irgend einem anderen Algorithmus zu simulieren, der ähnliche Betriebsverhältnisse aufweist. Wenn jedoch ein Test-Algorithmus mit ausreichender Komplexität verwendet wird, wie z. B. ein Algorithmus zur Berechnung von Fraktalen, so ist es in der Tat nahezu unmöglich, das Betriebsverhalten des Test-Algorithmus ohne Kenntnis der Ergebnisdaten nachzubilden. Selbst wenn die Funktionalität des Test-Algorithmus mit sehr großem Aufwand aus dem Layout der integrierten Schaltungen, die denselben ausführt, gewonnen werden sollte, so besteht der Sicherheitsaspekt der vorliegenden Erfindung darin, daß die Funktionalität an sich überhaupt nichts nutzt, sondern daß neben der Funktionalität auch das Betriebsverhalten der elektronischen Schaltung 16 nachgebildet werden müßte. Außerdem weiß ein Fälscher a priori nicht, ob nun die Betriebsdaten des Test-Algorithmus in den Krypto-Algorithmus eingespeist werden oder nicht, bzw. welche Kombinationen oder Verknüpfungen derselben vorliegen. So wäre es selbstverständlich möglich, nur bei ein paar Stufen die Ergebnisdaten des Test-Algorithmus zu berücksichtigen, und bei den anderen Stufen lediglich die Betriebsdaten in die Durchführung des Krypto-Algorithmus miteinzubeziehen.

Für die vorliegende Erfindung ist es daher nicht unbedingt notwendig, das Betriebsverhalten des kryptographischen Algorithmus oder Krypto-Algorithmus zu messen. Wie es aus Fig. 3 ersichtlich ist und bereits hinreichend beschrieben worden ist, kann ein Test-Algorithmus durch die elektronische Schaltung 16 ausgeführt werden, der vorzugsweise ein komplexer und schwieriger Algorithmus mit nur schwer vorhersagbarem oder "pseudochaotischem" Verhalten ist. Wenn nun im einfachsten Fall Eingangssignale verschiedener Länge verschiedene Betriebsdaten erzeugen, und wenn der Algorithmus an sich geheimgehalten wird, so ist bereits ein guter Schutz erreicht, da ein Fälscher, der die Funktionalität des Algorithmus nachbilden möchte, keine authentische Karte erzeugen kann, da ja nicht die Ergebnisdaten des Test-Algorithmus die Ausgangsdaten bilden, sondern im einfachsten Fall die Betriebsdaten. Zur Verbesserung der Version mit Test-Algorithmus allein können selbstverständlich bei der Erzeugung der Ausgangsdaten nicht nur ausschließlich die Betriebsdaten verwendet werden, sondern auch die Ergebnisdaten mit den Betriebsdaten auf irgendeine Art und Weise verknüpft werden. Den besten Schutz erreicht man jedoch, wenn der Test-Algorithmus mit dem Krypto-Algorithmus beispielsweise auf die in Fig. 3 gezeigte Art verknüpft wird.

Der Test-Algorithmus sollte spezielle Merkmale der elektronischen Schaltung 16 benutzen, wodurch die Schwierigkeit für Angriffe weiter erhöht wird. Ferner sollte dieser Algorithmus kein einfaches Laufzeitverhalten zeigen, das darin bestehen könnte, daß höherwertige Eingangssignale in langsameren Berechnungen resultieren. Ein solches Verhalten würde das Betriebsverhalten der elektronischen Schaltung 16, die den Algorithmus ausführt, in gewisser Weise wieder vorhersagbar machen. Daher kann das Eingangssignal beispiclsweise mittels einer Serie von XOR-Operationen randomisiert werden, oder dasselbe kann durch eine Funktion mit "pseudo-chaotischem" Verhalten geschickt werden, derart, daß das Ausgangssignal der Funktion zwar definiert mit dem Eingangssignal zusammenhängt, daß dieser Zusammenhang jedoch außerordentlich kompliziert ist und allein durch Betrachten kein funktionsmäßiger Zusammenhang zu sehen ist. In diesem Fall besteht der Test-Algorithmus selbst aus zwei Teilen, und zwar aus einem Teil, der das Eingangssignal zufällig oder zumindest sehr unvorhersagbar macht und aus einem zweiten Teil, der der eigentliche Test-Algorithmus ist, um beispielsweise den Zeitablauf oder den Leistungsverbrauch der integrierten Schaltung 16 bestimmen zu können.

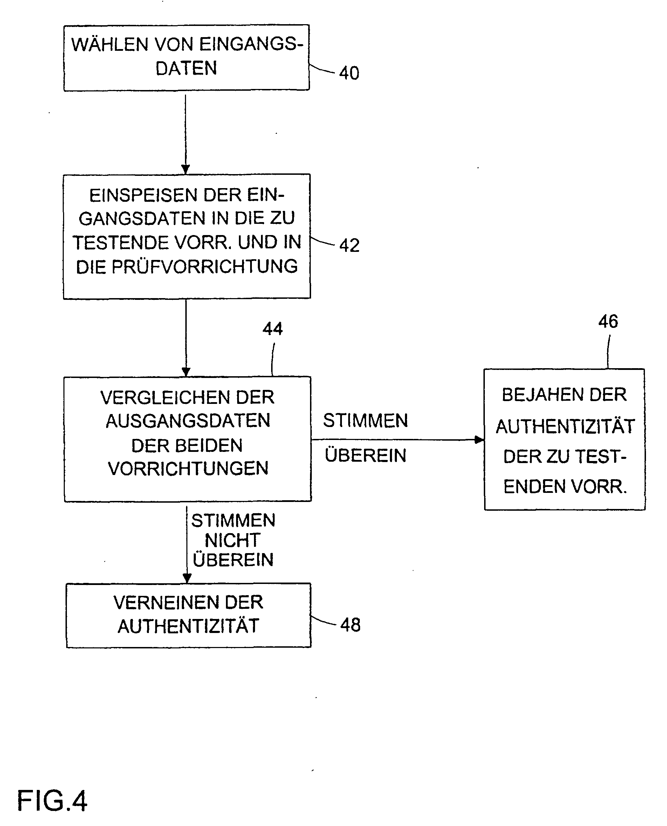

Fig. 4 zeigt ein Flußdiagramm für ein Verfahren zum Überprüfen der Authentizität einer Vorrichtung, wie es beispielsweise ein elektronisches Türschloß ausführen könnte, um nur einen Inhaber einer authentischen "Schlüsselkarte" durch die Türe passieren zu lassen. Ein solches elektronisches Türschloß umfaßt im allgemeinen Fall eine Mikrosteuerung und ein Karten-Lese/Schreib-Gerät, in das eine Karte mit der erfindungsgemäßen Vorrichtung eingeführt werden kann, sowie ein festinstalliertes Karten-Lese/Schreib-Gerät, in dem eine Referenzkarte, die ebenfalls die erfindungsgemäße Vorrichtung aufweist, fest eingebaut und von außen unzugänglich angeordnet ist. Die Referenz- oder Prüfvorrichtung entspricht der zu testenden Vorrichtung dahingehend, daß beide beispielsweise aus einer gleichen Produktcharge stammen, um sich hardwaremäßig zu gleichen, um ein möglichst ähnliches Betriebsverhalten zu haben.

Möchte nun ein Karteninhaber in eine Tür eintreten, die durch ein derartiges elektronisches Schlüsselsystem versehen ist, so wird er seine Karte, auf der die erfindungsgemäße Vorrichtung angebracht ist, in das Kartenlesegerät einführen.

Das Verfahren zum Überprüfen der Authentizität der eingeführten, d. h. zu testenden Vorrichtung ist in Fig. 4 dargestellt. Zunächst wählt die Mikrosteuerung beliebige zufällige Eingangsdaten (Block 40). In einem nächsten Schritt werden diese Eingangsdaten sowohl in die zu testende Vorrichtung als auch in die Prüfvorrichtung eingespeist (Block 42). Sowohl die von dem Benutzer bezüglich ihrer Authentizität zu überprüfende Vorrichtung, d. h. die zu testende Vorrichtung, als auch die in dem Türschloß vorzugsweise fest eingebaute Prüfvorrichtung führen nun parallel zueinander die gleichen Schritte durch und erzeugen Ausgangsdaten, wobei die Ausgangsdaten der Prüfvorrichtung von den Betriebsdaten der elektronischen Schaltung 16 der Prüfvorrichtung abhängen, und wobei die Ausgangsdaten der zu testenden Vorrichtung von den Betriebsdaten der elektronischen Schaltung 16 der zu testenden Vorrichtung abhängen.

In einem Block 44 werden die Ausgangsdaten der beiden Vorrichtungen verglichen. Stimmen dieselben überein, so wird die Authentizität der zu testenden Vorrichtung bejaht (Block 46). Stimmen die Ausgangsdaten nicht überein, so wird die Authentizität der zu testenden Vorrichtung verneint (Block 48), und das Türschloß wird nicht geöffnet. In diesem Fall werden sowohl die zu testende Vorrichtung als auch die Prüfvorrichtung von ein und derselben Mikrosteuerung "bedient". Dies bedeutet, daß beispielsweise ein externer Takt zur Messung des Zeitverhaltens, der mit der Einrichtung 18 zum Erfassen der Betriebsdaten gekoppelt ist, für beide Vorrichtungen identisch sind. In diesem Fall können die Betriebsdaten außerordentlich genau ermittelt werden, da Taktschwankungen oder ähnliches beide Vorrichtungen gleichermaßen betreffen und somit nicht zu einer Divergenz der beiden Vorrichtungen führen.

Dieses Verfahren, das darin besteht, daß einer Vorrichtung ein Eingangssignal gegeben wird, derart, daß dieselbe ein Ausgangssignal erzeugt, wobei das Ausgangssignal in Abhängigkeit des Eingangssignals beurteilt wird, wird auch als "Challenge-Response"-Algorithmus bezeichnet. Vorzugsweise wird irgendein zufälliges Eingangssignal der Vorrichtung zugeführt, welche dann mittels der elektronischen Schaltung 16 ein Ergebnis berechnet und die gesammelten Betriebsdaten ausgibt, d. h. bei den Ausgangsdaten verarbeitet. Die Verifizierung findet durch Vergleich mit einer Referenz- oder Prüfvorrichtung statt. Für einen Angreifer wäre es prinzipiell möglich, die Datenkommunikation zwischen der zu testenden Vorrichtung und der Mikrosteuerung innerhalb des Kartenlesegeräts, das ja per Definition nach außen zugänglich sein muß, abzuhören. Da jedoch bei dem bevorzugten Ausführungsbeispiel der vorliegenden Erfindung, das in Fig. 3 dargestellt ist, die Betriebsdaten lediglich innerhalb der erfindungsgemäßen Vorrichtung verarbeitet werden und nicht nach außen übermittelt werden, und da ferner die Ergebnisdaten des Test-Algorithmus ebenfalls innerhalb der Vorrichtung verbleiben und nicht nach außen übermittelt werden, und sogar überhaupt nicht weiter berücksichtigt werden, wird einem Angreifer auf die erfindungsgemäße Vorrichtung auch ein Abhören nicht besonders viel weiterhelfen. Die erfindungsgemäße Vorrichtung umfaßt daher drei Geheimaspekte, die zunächst ein herkömmliches geheimes Passwort für den Krypto-Algorithmus, weiterhin den geheimen Test-Algorithmus und schließlich den konkreten Hardware-Entwurf der elektronischen Schaltung 16 umfassen.

Das in Fig. 3 gezeigte Konzept des Einspeisens der Betriebsdaten in entsprechende folgende Stufen eines Krypto-Algorithmus, der bei dem bevorzugten Ausführungsbeispiel der DES-Algorithmus ist, führt zu dem sicherheitsmäßig bevorzugten Verwenden von Einbahnstraßen-Funktionen. Dies bedeutet, daß von bestimmten Eingangsdaten lediglich Ausgangsdaten berechnet werden können, daß jedoch nicht von den Ausgangsdaten funktionsmäßig auf die Eingangsdaten zurückgerechnet werden kann, da die Verwendung der Betriebsdaten eine chronologische Reihenfolge der Berechnung festlegt. Bei der in Fig. 4 gezeigten Überprüfung der Authentizität einer zu testenden Vorrichtung ist eine Umkehrung der Funktionalität auch gar nicht erforderlich, da sowohl die zu testende Vorrichtung als auch die Prüfvorrichtung parallel eine Einbahnstraßen-Funktion durchführen und niemals eine umgekehrte Berechnungsreihenfolge einsetzen müssen.

Wenn für die elektronische Schaltung 16 spezielle Prozessoren eingesetzt werden, die für bestimmte Operationen optimiert sind, derart, daß ein Standardchip oder ein Computer nicht in der Lage ist, das Zeitverhalten bestimmter Prozessoren zu simulieren, kann die Sicherheit weiter gesteigert werden.

Eine weitere Verbesserung besteht darin, daß der Test-Algorithmus, dessen Ergebnisse bei dem bevorzugten Ausführungsbeispiel, das in Fig. 3 gezeigt ist, nicht verwendet werden, und der lediglich zur Erzeugung der Betriebsdaten vorhanden ist, von Zeit zu Zeit ausgetauscht werden kann. Ein solcher Austausch des Test-Algorithmus ist flexibel möglich, es muß lediglich darauf geachtet werden, daß die zu testende Vorrichtung und die Prüfvorrichtung denselben Test-Algorithmus haben, um bei authentischer Karte gleiche Betriebsdaten zu haben.

Die vorliegende Erfindung kann auf nahezu jeden kryptographischen Algorithmus, d. h. Krypto-Algorithmus, angewendet werden. Ein Vorteil der vorliegenden Erfindung besteht zusätzlich darin, daß die vorliegende Erfindung in bestehende Sicherheitssysteme integriert werden kann.

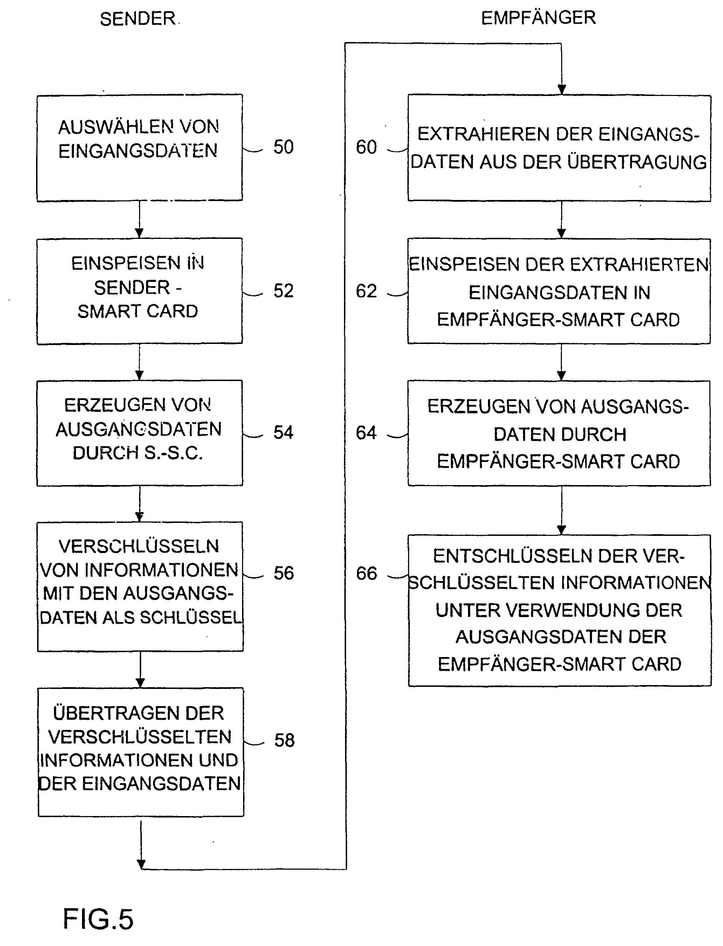

Fig. 5 zeigt eine weitere Anwendungsmöglichkeit der erfindungsgemäßen Vorrichtung am Beispiel des verschlüsselten Übertragens von Informationen von einem Ort zu einem anderen Ort, wie es beispielsweise beim "Fernsehen gegen Bezahlung" oder "Pay-TV" zu finden ist. Zunächst müssen die zu verschlüsselnden Informationen in einem Sender verschlüsselt werden. Dazu umfaßt der Sender eine Smart Card, die eine erfindungsgemäße Vorrichtung aufweist. Zunächst werden vom Sender zufällige Einganysdaten als Passwort-Zeichenkette ausgewählt (Block 50). In einem Block 52 werden die Eingangsdaten 14 in die Sender-Smart Card eingespeist, die in einem Schritt 54 Ausgangsdaten 12 erzeugt. Die zu verschlüsselnden Informationen werden nun mit den von der Sender-Smart Card erzeugten Ausgangsdaten 12 als Schlüssel verschlüsselt (Block 56). Die verschlüsselten Informationen werden nun zusammen mit den im Block 50 ausgewählten Ausgangsdaten von dem einen Ort zu dem anderen Ort, d. h. von dem Sender zu dem Empfänger, übertragen (Block 58).

Es sei darauf hingewiesen, daß zum einen nun die Informationen verschlüsselt sind und daher nur von dem entschlüsselt werden, der eine entsprechende Autorisierung beispielsweise in Form einer Empfänger-Smart Card erworben hat. Zum anderen wird der Schlüssel zum Verschlüsseln der Informationen nicht explizit übertragen, sondern lediglich die Eingangsdaten in die Sender-Smart Card. Ein Nutzer, der nicht im Besitz einer autorisierten Empfänger-Smart Card ist, die die gleichen Betriebsdaten wie die Sender-Smart Card aufweist, wird nun nicht in der Lage sein, aus den Eingangsdaten 14 die korrekten Ausgangsdaten 12 zu erzeugen, um die verschlüsselten Informationen wieder zu entschlüsseln.

Zunächst besteht die Aufgabe im Empfänger darin, die Eingangsdaten aus der Übertragung, die sowohl die verschlüsselten Informationen als auch die Eingangsdaten aufweist, zu extrahieren (Block 60). Die in dem Block 60 extrahierten Eingangsdaten werden nun in die Empfänger-Smart Card eingespeist (Block 62), die im Falle einer authentischen Empfänger-Smart Card das gleiche Betriebsverhalten wie die Sender-Smart Card aufweist, und damit aus den Eingangsdaten die gleichen Ausgangsdaten erzeugt (Block 64). In einem Block 66 werden schließlich die verschlüsselten Informationen unter Verwendung der Ausgangsdaten der Empfänger-Smart Card entschlüsselt.

Ist die Empfänger-Smart Card eine gefälschte Karte, die nicht dasselbe Betriebsverhalten wie die Sender-Smart Card aufweist, so wird dies bei dem in Fig. 5 gezeigten Verfahren nicht sofort erkannt, da keine Überprüfung der Authentizität, wie bei Fig. 4, stattfindet. Die Ausgangsdaten, die als Schlüssel zum Entschlüsseln benötigt werden, werden jedoch nicht den Ausgangsdaten, die im Block 54 zum Verschlüsseln verwendet wurde, entsprechen, weshalb keine korrekte Entschlüsselung der verschlüsselten Informationen möglich ist. Dies bedeutet, daß im einfachsten Fall eine gefälschte Smart Card im Empfänger nicht sofort beanstandet wird, sondern daß sie aufgrund anderer Betriebsdaten wie die Sender-Smart Card zwar Ausgangsdaten 12 liefert, daß jedoch mit den gelieferten Ausgangsdaten keine korrekte Entschlüsselung möglich ist, wodurch ein Fälscher keinen Nutzen seiner gefälschten Karte hat.

Die vorliegende Erfindung umfaßt daher eine elektronische Schaltung, die vorzugsweise integriert ist, und eine Einrichtung zum Überwachen des Betriebs der elektronischen Schaltung durch Messen von Daten, wobei der Betrieb der elektronischen Schaltung das Ausführen eines Algorithmus umfaßt, der als Ergebnis einer vorzugsweise komplexen Berechnung Ausgangsdaten liefert. Diese Ausgangsdaten werden jedoch durch die gemessenen Betriebsdaten beeinflußt. Vorzugsweise umfassen die gemessenen Daten Zeit- oder Leistungsmeßdaten. Die erfindungsgemäße Vorrichtung kann beliebig auf Karten, z. B. Smart Cards oder PC-Cards, elektronischen Schlüsseln und dergleichen, untergebracht werden.

## Patentansprüche

1. Vorrichtung (10) zum Liefern von Ausgangsdaten (12) als Reaktion auf Eingangsdaten (14), mit folgenden Merkmalen:
einer elektronischen Schaltung (16) zum Ausführen eines Algorithmus, um aus den Eingangsdaten (14) die Ausgangsdaten (12) zu erzeugen; und
einer Einrichtung (18) zum Erfassen von Betriebsdaten der elektronischen Schaltung (16), die durch einen Betrieb der elektronischen Schaltung (16) beeinflußt werden, wenn die elektronische Schaltung (16) den Algorithmus ausführt, wobei die Betriebsdaten von den Eingangsdaten abhängen,
wobei die Einrichtung (18) zum Erfassen von Betriebsdaten mit der elektronischen Schaltung (16) derart gekoppelt ist, daß die erfaßten Betriebsdaten der elektronischen Schaltung von dem Algorithmus, der durch die elektronische Schaltung (16) ausgeführt wird, verwendet werden, um die Ausgangsdaten (12) zu erzeugen, wodurch anhand der Ausgangsdaten die Authentizität der Vorrichtung (10) bestimmt wird.

2. Vorrichtung (10) nach Anspruch 1, bei der die Betriebsdaten aus der Gruppe ausgewählt sind, die zeitdaten und Leistungsdaten umfaßt.

3. Vorrichtung (10) nach Anspruch 1 oder 2, bei der die elektronische Schaltung (16) und die Einrichtung (18) zum Erfassen als eine Einheit integriert sind.

4. Vorrichtung (10) nach einem der vorhergehenden Ansprüche, die in einer Smart Card oder einer PC-Card enthalten ist.

5. Vorrichtung (10) nach einem der vorhergehenden Ansprüche, bei der die elektronische Schaltung (16) angeordnet ist, um einen Krypto-Algorithmus auszuführen.

6. Vorrichtung (10) nach einem der Ansprüche 1 bis 4, bei der die elektronische Schaltung (16) angeordnet ist, um einen Prüfsummen-Algorithmus auszuführen.

7. Vorrichtung (10) nach Anspruch 5, bei der der Krypto-Algorithmus ein mehrstufiger Algorithmus ist, wobei die Betriebsdaten einer Algorithmus-Stufe als Eingangsdaten für die darauffolgende Algorithmus-Stufe verwendet werden.

8. Vorrichtung (10) nach einem der Ansprüche 1 bis 6, bei der die elektronische Schaltung (16) angeordnet ist, um nach einer vorbestimmten Ausführungszeit während der Ausführung des Algorithmus den Betrieb anzuhalten, und bei der die Einrichtung (18) zum Erfassen angeordnet ist, um Betriebsdaten zu der vorbestimmten Ausführungszeit in den Algorithmus einzuspeisen.

9. Vorrichtung (10) nach einem der Ansprüche 1 bis 3, bei der der Algorithmus derart gestaltet ist, daß er die Eingangsdaten (14) zunächst randomisiert, wodurch die Abhängigkeit der Betriebsdaten von den Eingangsdaten pseudozufällig ist.

10. Vorrichtung (10) nach Anspruch 9, bei der die Ausgangsdaten, die durch den Algorithmus erzeugt werden, lediglich die Betriebsdaten sind.

11. Vorrichtung (10) nach einem der Ansprüche 1 bis 4, bei der die elektronische Schaltung (16) zwei Teilschaltungen (16a, 16b) aufweist, die je einen Teil-Algorithmus ausführen, wobei der erste Teil-Algorithmus ein Test-Algorithmus ist, dessen Betriebsdaten durch die Einrichtung (18) zum Erfassen erfaßt werden, und wobei der zweite Teil-Algorithmus ein Krypto-Algorithmus oder ein Prüfsummen-Algorithmus ist, wobei die Betriebsdaten des Test-Algorithmus in dem Krypto-Algorithmus verarbeitet werden.

12. Vorrichtung (10) nach Anspruch 11, bei der die zweite Teilschaltung (16a) angeordnet ist, um den DES-Algorithmus auszuführen, der n Stufen aufweist, und bei der die erste Teilschaltung (16b) angeordnet ist, um einen Test-Algorithmus auszuführen, der ebenfalls n Stufen aufweist, wobei die Eingangsdaten sowohl in die erste Stufe des DES-Algorithmus als auch in die erste Stufe des Test-Algorithmus einspeisbar sind, und wobei Daten, die in eine weitere Stufe des DES-Algorithmus einspeisbar sind, Ergebnisdaten der ersten Stufe des DES-Algorithmus und Betriebsdaten der ersten Stufe des Test-Algorithmus sind, während ein Ergebnis einer Stufe des Test-Algorithmus verworfen wird.

13. Vorrichtung (10) nach einem der vorhergehenden Ansprüche, bei der die Einrichtung zum Erfassen von Betriebsdaten eine Zeitmeßeinrichtung (18a) und eine Leistungsmeßeinrichtung (18b) aufweist, um die Zeit zu messen, die die elektronische Schaltung (16) zum Ausführen einer bestimmten Aufgabe benötigt, bzw. um die Leistung zu messen, die beim Ausführen der bestimmten Aufgabe verbraucht wird.

14. Vorrichtung (10) nach Anspruch 13, bei der die Leistungsmeßeinrichtung (18b) einen Widerstand, einen Kondensator und einen A/D-Wandler zum Messen der verbrauchten Leistung aufweist.

15. Vorrichtung (10) nach Anspruch 13 oder 14, bei der die Zeitmeßeinrichtung einen internen Taktgenerator aufweist.

16. Vorrichtung (10) nach einem der vorhergehenden Ansprüche, bei der die Einrichtung (18) zum Erfassen der Betriebsdaten einen Mustererkennungs-Algorithmus aufweist, um aus Leistungs- oder Zeitparametern der elektronischen Schaltung (16) die Betriebsdaten zu erzeugen.

17. Verfahren zum Überprüfen der Authentizität einer zu testenden Vorrichtung gegenüber einer Prüfvorrichtung, wobei die zu testende Vorrichtung und die Prüfvorrichtung jeweils eine elektronische Schaltung (16) zum Ausführen eines Algorithmus, der aus Eingangsdaten (14) Ausgangsdaten (12) erzeugt, und eine Einrichtung (18) zum Erfassen von Betriebsdaten, die durch einen Betrieb der elektronischen Schaltung (16) beeinflußt werden und von den Eingangsdaten abhängen, aufweisen, wobei sowohl bei der zu testenden Vorrichtung als auch bei der Prüfvorrichtung die Einrichtung (18) zum Erfassen der Betriebsdaten mit der elektronischen Schaltung (16) derart gekoppelt ist, daß die Betriebsdaten der elektronischen Schaltung durch den Algorithmus verwendet werden, um die Ausgangsdaten zu erzeugen, wobei das Verfahren folgende Schritte aufweist:
Auswählen (40) von Eingangsdaten;
Einspeisen (42) der Eingangsdaten in die zu testende Vorrichtung (10);
in der zu testenden Vorrichtung,
Ausführen des Algorithmus durch die elektronische Schaltung der zu testenden Vorrichtung, um aus den Eingangsdaten die Ausgangsdaten zu erzeugen,
Erfassen von Betriebsdaten der elektronischen Schaltung, die durch einen Betrieb der elektronischen Schaltung beeinflußt werden, wenn die elektronische Schaltung den Algorithmus ausführt, wobei die Betriebsdaten von den Eingangsdaten abhängen, und wobei die erfaßten Betriebsdaten der elektronischen Schaltung von dem Algorithmus, der durch die elektronische Schaltung (16) ausgeführt wird, verwendet werden, um die Ausgangsdaten (12) zu erzeugen;
Einspeisen (42) der Eingangsdaten in die Prüfvorrichtung (10);
in der Prüfvorrichtung,
Ausführen des Algorithmus durch die elektronische Schaltung der Prüfvorrichtung, um aus den Eingangsdaten die Ausgangsdaten zu erzeugen,
Erfassen von Betriebsdaten der elektronischen Schaltung, die durch einen Betrieb der elektronischen Schaltung beeinflußt werden, wenn die elektronische Schaltung den Algorithmus ausführt, wobei die Betriebsdaten von den Eingangsdaten abhängen, und wobei die erfaßten Betriebsdaten der elektronischen Schaltung von dem Algorithmus, der durch die elektronische Schaltung (16) ausgeführt wird, verwendet werden, um die Ausgangsdaten (12) zu erzeugen;
Vergleichen (44) der Ausgangsdaten der zu testenden Vorrichtung mit den Ausgangsdaten der Prüfvorrichtung; und
Bejahen (46) der Authentizität der zu testenden Vorrichtung gegenüber der Prüfvorrichtung, wenn die Ausgangsdaten übereinstimmen, derart, daß eine Authentizität lediglich dann bejaht wird, wenn die Betriebsdaten der zu testenden Vorrichtung und der Prüfvorrichtung entsprechend sind.

18. Verfahren zum verschlüsselten Übertragen von Informationen von einem ersten zu einem von dem ersten Ort entfernten zweiten Ort, mit folgenden Merkmalen:
Erzeugen (50) eines Zufallsworts;
Einspeisen (52) des Zufallsworts in eine erste Vorrichtung, die nach einem der Ansprüche 1 bis 16 ausgeführt ist und an dem ersten Ort angeordnet ist;
Erzeugen (54) der Ausgangsdaten der ersten Vorrichtung, die von den Betriebsdaten der ersten Vorrichtung abhängen, durch Ausführen eines Algorithmus durch die elektronische Schaltung der ersten Vorrichtung, um aus den Eingangsdaten die Ausgangsdaten zu erzeugen, wobei Betriebsdaten der elektronischen Schaltung erfaßt werden, die durch einen Betrieb der elektronischen Schaltung beeinflußt werden, wenn die elektronische Schaltung den Algorithmus ausführt, wobei die Betriebsdaten von den Eingangsdaten abhängen, und wobei die erfaßten Betriebsdaten der elektronischen Schaltung von dem Algorithmus, der durch die elektronische Schaltung ausgeführt wird, verwendet werden, um die Ausgangsdaten zu erzeugen;
Verschlüsseln (56) der Informationen mit den erzeugten Ausgangsdaten als Schlüssel;
Übertragen (58) der verschlüsselten Informationen und des Zufallsworts von dem ersten Ort zu dem zweiten Ort;
Einspeisen (62) des Zufallsworts in eine zweite Vorrichtung, die nach einem der Ansprüche 1 bis 16 ausgeführt ist und an dem zweiten Ort positioniert ist;
Erzeugen (64) der Ausgangsdaten der zweiten Vorrichtung, die von den Betriebsdaten der zweiten Vorrichtung abhängen, durch Ausführen des Algorithmus durch die elektronische Schaltung der zweiten Vorrichtung, um aus den Eingangsdaten die Ausgangsdaten zu erzeugen, wobei Betriebsdaten der elektronischen Schaltung erfaßt werden, die durch einen Betrieb der elektronischen Schaltung beeinflußt werden, wenn die elektronische Schaltung den Algorithmus ausführt, wobei die Betriebsdaten von den Eingangsdaten abhängen, und wobei die erfaßten Betriebsdaten der elektronischen Schaltung von dem Algorithmus, der durch die elektronische Schaltung ausgeführt wird, verwendet werden, um die Ausgangsdaten zu erzeugen;
Entschlüsseln (66) der verschlüsselten Informationen unter Verwendung der Ausgangsdaten der zweiten Vorrichtung als Schlüssel,
wobei die entschlüsselten Informationen dann den ursprünglichen Informationen vor dem Verschlüsseln entsprechen, wenn die Betriebsdaten der ersten Vorrichtung an dem ersten Ort den Betriebsdaten der zweiten Vorrichtung an dem zweiten Ort entsprechen.

## Claims

1. A device (10) for supplying output data (12) in reaction to input data (14), comprising:
an electronic circuit (16) for executing an algorithm so as to generate the output data (12) on the basis of the input data (14); and
a unit (18) for detecting operational data of the electronic circuit (16) which are influenced by an operation of said electronic circuit (16) when said electronic circuit (16) executes the algorithm, the operational data depending on the input data,
said operational data detection unit (18) being coupled to the electronic circuit (16) in such a way that the detected operational data of the electronic circuit are used by the algorithm, which is executed by said electronic circuit (16), for generating the output data (12), whereby the authenticity of the device (10) is determined on the basis of the output data.

2. A device (10) according to claim 1, wherein the operational data are selected from the group comprising time data and power data.

3. A device (10) according to claim 1 or 2, wherein the electronic circuit (16) and the detection unit (18) are integrated as a unit.

4. A device (10) according to one of the preceding claims, which is contained in a smart card or in a PC card.

5. A device (10) according to one of the preceding claims, wherein the electronic circuit (16) is arranged so as to execute an cryptoalgorithm.

6. A device (10) according to one of the claims 1 to 4, wherein the electronic circuit (16) is arranged so as to execute a check sum algorithm.

7. A device (10) according to claim 5, wherein the cryptoalgorithm is a multi-step algorithm, the operational data of one algorithm step being used as input data for the subsequent algorithm step.

8. A device (10) according to one of the claims 1 to 6, wherein the electronic circuit (16) is arranged so as to stop the operation after a predetermined execution time during execution of the algorithm and wherein the detection unit (18) is arranged so as to feed operational data into the algorithm at said predetermined execution time.

9. A device (10) according to one of the claims 1 to 3, wherein the algorithm is of such a nature that it will first randomize the input data (14), whereby the dependence of the operational data on the input data will be pseudo-random.

10. A device (10) according to claim 9, wherein the output data generated by the algorithm are only the operational data.

11. A device (10) according to one of the claims 1 to 4, wherein the electronic circuit (16) comprises two sub-circuits (16a, 16b) which each execute a sub-algorithm, the first sub-algorithm being a test algorithm whose operational data are detected by the detection unit (18), and the second sub-algorithm being a cryptoalgorithm or a check sum algorithm, the operational data of the test algorithm being processed in the cryptoalgorithm.

12. A device (10) according to claim 11, wherein the second sub-circuit (16a) is arranged so as to execute the DES algorithm which comprises n steps, and wherein the first sub-circuit (16b) is arranged so as to execute a test algorithm which also comprises n steps, the input data being adapted to be fed into the first step of the DES algorithm as well as into the first step of the test algorithm, and data which are adapted to be fed into a further step of the DES algorithm being result data of the first step of the DES algorithm and operational data of the first step of the test algorithm, whereas a result of one step of the test algorithm is rejected.

13. A device (10) according to one of the preceding claims, wherein the operational data detection unit comprises a time measuring means (18a) and a power measuring means (18b) for measuring the time which the electronic circuit (16) needs for executing a specific task and for measuring the power consumed when said specific task is being executed.

14. A device (10) according to claim 13, wherein the power measuring means (18b) comprises a resistor, a capacitor and an analog-digital converter for measuring the power consumed.

15. A device (10) according to claim 13 or 14, wherein the time measuring means comprises an internal clock generator.

16. A device (10) according to one of the preceding claims, wherein the operational data detection unit (18) comprises a pattern recognition algorithm so as to produce the operational data from power or time parameters of the electronic circuit (16).

17. A method for checking the authenticity of a device to be tested in comparison with an examination device, the device to be tested and the examination device each comprising an electronic circuit (16) for executing an algorithm, which generates output data (12) on the basis of input data (14), and a unit (18) for detecting operational data which are influenced by an operation of the electronic circuit (16) and which depend on the input data, the operational data detection unit (18) of the device to be tested as well as of the examination device being coupled to the electronic circuit (16) in such a way that the operational data of the electronic circuit are used by the algorithm for producing the output data, said method comprising the following steps;
selecting (40) input data;
feeding (42) said input data into the device (10) to be tested;
in the device to be tested,
executing the algorithm by the electronic circuit of the device to be tested, so as to generate the output data on the basis of the input data,
detecting operational data of the electronic circuit, which are influenced by an operation of said electronic circuit when said electronic circuit executes the algorithm, said operational data depending on the input data, and said detected operational data of the electronic circuit being used by the algorithm, which is executed by said electronic circuit (16), so as to generate the output data (12);
feeding (42) the input data into the examination device (10);
in the examination device
executing the algorithm by the electronic circuit of the examination device so as to generate the output data on the basis of the input data,
detecting operational data of the electronic circuit, which are influenced by an operation of the electronic circuit when said electronic circuit executes the algorithm, said operational data depending on the input data, and said detected operational data of the electronic circuit being used by the algorithm, which is executed by said electronic circuit (16), so as to generate the output data (12);
comparing (44) the output data of the device to be tested with the output data of the examination device; and
affirming (46) the authenticity of the device to be tested in comparison with the examination device if the output data correspond to one another, in such a way that authenticity will only be affirmed if the operational data of the device to be tested and of the examination device correspond to one another.

18. A method for encrypted transmission of information from a first to a second location, the second location being remote from the first location, comprising:
producing (50) a random word;
feeding (52) the random word into a first device implemented according to one of the claims 1 to 16 and arranged at the first location;
generating (54) the output data of the first device, which depend on the operational data of said first device, by executing an algorithm by the electronic circuit of said first device so as to generate the output data on the basis of the input data, operational data of the electronic circuit being detected, which are influenced by an operation of the electronic circuit when said electronic circuit executes the algorithm, said operational data depending on the input data, and said detected operational data of the electronic circuit being used by the algorithm, which is executed by the electronic circuit, so as to generate the output data;
encrypting (56) the information with the generated output data as a key;
transmitting (58) the encrypted information and the random word from said first location to said second location;
feeding (62) the random word into a second device implemented according to one of the claims 1 to 16 and positioned at the second location;
generating (64) the output data of the second device, which depend on the operational data of said second device, by executing the algorithm by the electronic circuit of said second device, so as to generate the output data on the basis of the input data, operational data of the electronic circuit being detected, which are influenced by an operation of the electronic circuit when said electronic circuit executes the algorithm, said operational data depending on the input data, and said detected operational data of the electronic circuit being used by the algorithm, which is executed by the electronic circuit, so as to generate the output data;
decrypting (66) the encrypted information making use of the output data of the second device as a key,
the decrypted information corresponding to the original information prior to encrypting if the operational data of the first device at the first location correspond to the operational data of the second device at the second location.

## Revendications

1. Dispositif (10) pour fournir des données de sortie (12) en réaction à des données d'entrée (14), aux caractéristiques suivantes :
un circuit électronique (16) destiné à exécuter un algorithme, pour générer, à partir des données d'entrée (14), les données de sortie (12); et
un dispositif (18) destiné à capter des données de fonctionnement du circuit électronique (16) influencées par un fonctionnement du circuit électronique (16) lorsque le circuit électronique (16) exécute l'algorithme, les données de fonctionnement étant fonction des données d'entrée,
le dispositif (18) destiné à capter des données de fonctionnement étant couplé au circuit électronique (16) de telle sorte que les données de fonctionnement du circuit électronique captées soient utilisées par l'algorithme exécuté par le circuit électronique (16), pour générer les données de sortie (12), d'où l'authenticité du dispositif (10) est déterminée en référence aux données de sortie.

2. Dispositif (10) selon la revendication 1, dans lequel les données de fonctionnement sont choisies parmi le groupe comportant des données de temps et des données de puissance.

3. Dispositif (10) selon la revendication 1 ou la revendication 2, dans lequel le circuit électronique (16) et le dispositif (18) destiné à capter sont intégrés en une seule unité.

4. Dispositif (10) selon l'une des revendications précédentes, contenu dans une carte intelligente ou dans une carte d'OP.

5. Dispositif (10) selon l'une des revendications précédentes, dans lequel le circuit électronique (16) est disposé de manière à réaliser un algorithme de cryptage.

6. Dispositif (10) selon l'une des revendications 1 à 4, dans lequel le circuit électronique (16) est disposé de manière à exécuter un algorithme de sommes de contrôle.

7. Dispositif (10) selon la revendication 5, dans lequel l'algorithme de cryptage est un algorithme à plusieurs étages, les données de fonctionnement d'un étage de l'algorithme étant utilisées comme données d'entrée de l'étage d'algorithme suivant.

8. Dispositif (10) selon l'une des revendications 1 à 6, dans lequel le circuit électronique (16) est disposé de manière à arrêter le fonctionnement après un temps d'exécution prédéterminé pendant la réalisation de l'algorithme, et dans lequel le dispositif (18) destiné à capter est disposé de manière à alimenter vers l'algorithme des données de fonctionnement au moment d'exécution prédéterminé.

9. Dispositif (10) selon l'une des revendications 1 à 3, dans lequel l'algorithme se présente de telle sorte qu'il choisit tout d'abord les données d'entrées (14) de manière aléatoire, d'où la dépendance des données de fonctionnement des données d'entrée est pseudo-aléatoire.

10. Dispositif (10) selon la revendication 9, dans lequel les données de sortie générées par l'algorithme sont uniquement les données de fonctionnement.

11. Dispositif (10) selon l'une des revendications 1 à 4, dans lequel le circuit électronique (16) présente deux circuits partiels (16a, 16b) réalisant, chacun, un algorithme partiel, le premier algorithme partiel étant un algorithme de test dont les données de fonctionnement sont captées par le dispositif (18) destiné à capter, et le second algorithme partiel étant un algorithme de cryptage ou un algorithme de sommes de contrôle, les données de fonctionnement de l'algorithme de test étant traitées dans l'algorithme de cryptage.

12. Dispositif (10) selon la revendication 11, dans lequel le second circuit partiel (16a) est disposé de manière à exécuter l'algorithme DES présentant n étages, et dans lequel le premier circuit partiel (16b) est disposé de manière à exécuter un algorithme de test aussi présentant n étages, les données d'entrée pouvant être alimentées tant vers le premier étage de l'algorithme DES que vers le premier étage de l'algorithme de test, et les données pouvant être alimentées vers un autre étage de l'algorithme DES étant des données de résultat du premier étage de l'algorithme DES et du premier étage de l'algorithme de test, tandis qu'un résultat d'un étage de l'algorithme de test est rejeté.

13. Dispositif (10) selon l'une des revendications précédentes, dans lequel le dispositif destiné à capter les données de fonctionnement présente un dispositif de mesure de temps (18a) et un dispositif de mesure de puissance (18b), pour mesurer le temps que nécessite le circuit électronique (16) pour exécuter une tâche déterminée, ou pour mesurer la puissance qui est consommée lors de l'exécution d'une tâche déterminée.

14. Dispositif (10) selon la revendication 13, dans lequel le dispositif de mesure de temps (18a) présente une résistance, un condensateur et un convertisseur A/N pour mesurer la puissance consommée.

15. Dispositif (10) selon la revendication 13 ou 14, dans lequel le dispositif de mesure de temps présente un générateur de cycle d'horloge interne.

16. Dispositif (10) selon l'une des revendications précédentes, dans lequel le dispositif (18) destiné à capter les données de fonctionnement présente un algorithme de reconnaissance de modèle, pour générer les données de fonctionnement à partir des paramètres de puissance ou de temps du circuit électronique (16).

17. Procédé pour vérifier l'authenticité d'un dispositif à tester par rapport à un dispositif de contrôle, le dispositif à tester et le dispositif de contrôle présentant, chacun, un circuit électronique (16) destiné à exécuter un algorithme générant des données de sortie (12) à partir de données d'entrée (14), et un dispositif (18) destiné à capter des données de fonctionnement qui sont influencées par un fonctionnement du circuit électronique (16) et qui sont fonction des données d'entrée, le dispositif (18) destiné à capter les données de fonctionnement étant, tant dans le dispositif à tester que dans le dispositif de contrôle, couplé au circuit électronique (16) de telle sorte que les données de fonctionnement du circuit électronique soient utilisées par l'algorithme pour générer les données de sortie, le procédé présentant les étapes suivantes consistant à :
sélectionner (40) des données d'entrée ;
alimenter (42) les données d'entrée vers le dispositif à tester (10) ;
dans le dispositif à tester,
exécution de l'algorithme par le circuit électronique du dispositif à tester, pour générer les données de sortie à partie des données d'entrée, capter des données de fonctionnement du circuit électronique qui sont influencées par un fonctionnement du circuit électronique lorsque le circuit électronique exécute l'algorithme, les données de fonctionnement étant fonction des données d'entrée, et les données de fonctionnement du circuit électronique captées étant utilisées par l'algorithme exécuté par le circuit électronique (16), pour générer les données de sortie (12) ;
alimenter (42) les données d'entrée vers le dispositif de contrôle (10) ;
dans le dispositif de contrôle,
exécution de l'algorithme par le circuit électronique du dispositif de contrôle, pour générer les données de sortie à partir des données d'entrée; capter des données de fonctionnement du circuit électronique qui sont influencées par un fonctionnement du circuit électronique lorsque le circuit électronique exécute l'algorithme, les données de fonctionnement étant fonction des données d'entrée, et les données de fonctionnement du circuit électronique captées étant utilisées par l'algorithme exécuté par le circuit électronique (16), pour générer les données de sortie (12) ;
comparer (44) les données de sortie du dispositif à tester avec les données de sortie du dispositif de contrôle ; et
affirmer (46) l'authenticité du dispositif à tester par rapport au dispositif de contrôle lorsque les données de sortie coïncident, de sorte qu'une authenticité n'est affirmée que lorsque les données de fonctionnement du dispositif à tester et du dispositif de contrôle correspondent.

18. Procédé pour la transmission cryptée d'informations d'un premier endroit à un second endroit distant du premier endroit, aux caractéristiques suivantes :
génération (50) d'un mot aléatoire ;
alimentation (52) du mot aléatoire vers un premier dispositif réalisé selon l'une des revendications 1 à 16 et disposé au premier endroit ;
génération (54) des données de sortie du premier dispositif qui sont fonction des données de fonctionnement du premier dispositif, par l'exécution d'un algorithme par le circuit électronique du premier dispositif, pour générer les données de sortie à partir des données d'entrée, lors de quoi sont captées les données de fonctionnement du circuit électronique qui sont influencées par un fonctionnement du circuit électronique lorsque le circuit électronique exécute l'algorithme, les données de fonctionnement étant fonction des données d'entrée, et les données de fonctionnement du circuit électronique captées étant utilisées par l'algorithme exécuté par le circuit électronique, pour générer les données de sortie ;
crypter (56) les informations par les données de sortie comme clef ;
transmettre (58) les informations cryptées et le mot aléatoire du premier endroit au second endroit ;
alimentation (62) du mot aléatoire vers un second dispositif réalisé selon l'une des revendications 1 à 16 et disposé au second endroit ;
génération (64) des données de sortie du second dispositif qui sont fonction des données de fonctionnement du second dispositif, par l'exécution d'un algorithme par le circuit électronique du second dispositif, pour générer les données de sortie à partir des données d'entrée, lors de quoi sont captées les données de fonctionnement du circuit électronique qui sont influencées par un fonctionnement du circuit électronique lorsque le circuit électronique exécute l'algorithme, les données de fonctionnement étant fonction des données d'entrée, et les données de fonctionnement du circuit électronique captées étant utilisées par l'algorithme exécuté par le circuit électronique, pour générer les données de sortie ;
décrypter (66) les informations cryptées à l'aide des données de sortie du second dispositif comme clef,
les informations décryptées correspondant aux informations originales avant le cryptage lorsque les données de fonctionnement du premier dispositif au premier endroit correspondent aux données de fonctionnement du second dispositif au second endroit.
